# EUROPÄISCHE PATENTSCHRIFT

(11) **EP 1 251 311 B1**
(45) Veröffentlichungstag und Bekanntmachung des Hinweises auf die Patenterteilung: **09.07.2003**
(21) Anmeldenummer: 01109513.0
(22) Anmeldetag: 17.04.2001
(51) Int. Cl.: F23G 1/00, F23G 5/00, F23G 5/02, A22B 7/00

(54) **Verfahren der Energieversorgung eines Schlachtbetriebs**
Process for the energy supply of a slaughter house
Procédé pour l'alimentation énergétique d'un abattoir

(43) Veröffentlichungstag der Anmeldung: 23.10.2002
(73) Patentinhaber: SÜDFLEISCH GmbH, D-80337 München (DE)
(72) Erfinder: GROSS, Peter c/o Südfleisch GmbH, 80337 München (DE)
(74) Vertreter: Riederer Freiherr von Paar zu Schönau, Anton

(56) Entgegenhaltungen:
- EP-A- 0 343 535
- EP-A- 0 767 011
- DE-A- 3 835 230
- DE-A- 19 708 459
- DE-C- 19 621 751
- US-B1- 6 189 463
- PATENT ABSTRACTS OF JAPAN vol. 006, no. 076 (M-128), 13. Mai 1982 (1982-05-13) & JP 57 016713 A (MITSUBISHI RAYON ENG KK;OTHERS: 01), 28. Januar 1982 (1982-01-28)
- PATENT ABSTRACTS OF JAPAN vol. 1996, no. 04, 30. April 1996 (1996-04-30) & JP 07 322858 A (NIKKO SANGYO KK), 12. Dezember 1995 (1995-12-12)

## Beschreibung

Die Erfindung bezieht sich auf ein Verfahren der Energieversorgung eines Schlachtbetriebs, insbesondere eines industriellen Schlachtbetriebs zum Schlachten von Rindern und Schweinen, aber auch eines Schlachtbetriebs z. B. fiir Schafe, Ziegen und Geflügel, der Bedarf an elektrischer und thermischer Energie sowohl für den fleischproduzierenden Betriebsteil als auch für den Teil der Entsorgung von Restprodukten hat.

Gewöhnlich wird der Energiebedarf eines Schlachtbetriebs durch Strombezug aus dem öffentlichen Elektrizitätsnetz und durch Bezug von Heizgas, insbesondere Erdgas, ebenfalls von der öffentlichen Versorgung, oder Heizöl gedeckt. Ein nennenswerter Bedarf fällt beim fleischproduzierenden Betriebsteil an, ein weiterer nennenswerter Bedarf jedoch auch bei der Entsorgung der Restprodukte, die auch als Sekundärrohstoffe bezeichnet werden können und in ziemlich großer Menge anfallen. Eines der möglichen Entsorgungsverfahren besteht darin, daß diese Produkte getrocknet und verbrannt werden.

Bemühungen, den Bezug von Fremdenergie zu reduzieren und im Schlachtbetrieb anfallende Energiemengen für den Eigenbedarf auszunützen, haben bisher in der Praxis noch nicht zu einer Optimierung der Situation geführt. Durch die Erfindung soll nun ein Verfahren angegeben werden, durch das eine höhere, in manchen Fällen vermutlich sogar völlige Unabhängigkeit von einer Fremdenergieversorgung erzielt werden kann.

Dies wird gemäß der Erfindung dadurch erreicht, daß man von allen zu entsorgenden Restprodukten einerseits fette tierische Restprodukte und andererseits anaerob vergärbare tierische Restprodukte und gegebenenfalls auch noch weitere, nicht auf diesen Wegen verwertbare Restprodukte jeweils getrennt kanalisiert und die Verwertung der verwertbaren Restprodukte dahingehend kombiniert, daß man die vergärbaren tierischen Restprodukte unter Erzeugung von brennbarem Gas, sogenanntem Biogas, zur Vergärung bringt und mit zumindest einem Teil des brennbaren Gases elektrische Leistung erzeugt, vorzugsweise indem man damit wenigstens eine Brennkraftmaschine betreibt, deren Ausgangsleistung man in elektrische Leistung umsetzt, man die fetten tierischen Restprodukte nach einer Aufbereitung als Treibstoff verwendet, mit dem man wenigstens eine nach dem Dieselprinzip arbeitende Brennkraftmaschine betreibt, deren Ausgangsleistung man ebenfalls in elektrische Leistung umsetzt, und daß man die Verlustwärme von wenigstens einer der Brennkraftmaschinen als Abwärme abnimmt und an Energieverbraucher des Schlachtbetriebs zurückführt. Durch dieses Gesamtkonzept wird mit hervorragendem Wirkungsgrad eine Energiemenge erzeugt, die bei günstigen Verhältnissen sogar den Eigenenergiebedarf übersteigt und noch zusätzlichen Strom zur Einspeisung in das öffentliche Elektrizitätsnetz erbringt.

Bei den Brennkraftmaschinen wendet man zweckmäßigerweise die an sich bekannte Blockheizkraftwerk-Technik an, die sowohl elektrische Leistung als auch Wärmeleistung in steuerbarer Höhe ergibt.

Im Rahmen der Erfindung werden also die Restprodukte in nutzbare Energie konvertiert, und diese wird zumindest teilweise wieder im industriellen Prozeß eingesetzt.

Für die Anlage zur Vergärung, einschließlich einer nachgeschalteten Hygienisierung der Restprodukte, wird allerdings selbst auch Energie verbraucht, nämlich insbesondere Wärmeenergie, aber auch in gewissem Umfang mechanische Energie. Bei der Vergärung der Restprodukte entstehen nämlich wiederum sekundäre Restprodukte, die gemäß in vielen Ländern existierenden gesetzlichen Bestimmungen hitze- und druckbehandelt werden müssen, und eine bevorzugte Verfahrensdurchführung sieht vor, daß man einen Teil der Brennkraftmaschinen-Abwärme abzweigt und zur Energiespeisung einer Station verwendet, in der man nicht-gasförmige Restprodukte der Vergärung zur Entsorgung vorbereitet, nämlich hygienisiert und gegebenenfalls trocknet, und man getrocknete Restprodukte der Vergärung zur weiteren Wärmegewinnung verbrennt. Generell ist nämlich die eigentliche Restevergärung ein insgesamt exothermer Vorgang, einschließlich der Hygienisierung ist die Biogaserzeugung aber endotherm.

Die Brennkraftmaschinen für die Fettverwertung können große, leistungsstarke Dieselmotoren sein, beispielsweise in der Größenordnung von je 500 bis 2.000 kW. Meist übertrifft der Leistungsumsatz dieser Fettverwertungsstation den der Biogasstation um ein Mehrfaches. Hierbei ist zu bedenken, daß pro geschlachtetem Rind ca. 30 bis 35 kg Fett anfallen, pro geschlachtetem Schwein etwa 2 kg. Pro kg Fett können etwa 4 kWh an elektrischer Energie erzeugt werden. Die fetten Restprodukte werden in einer Fettschmelze aufbereitet, wobei als Treibstoff verwendbares geschmolzenes Fett und außerdem Wasser und Griebenmaterial entstehen. Die Energie hierfür kann wiederum der Reststoffverwertung entnommen werden.

Bei der Biogasverwertung ist die Umwandlung des Biogases in elektrische Energie mit Hilfe von Brennstoffzellen möglich (DE 195 11 734 A), gemäß heutiger Technik ist jedoch die mechanische Energieumwandlung vorerst noch zu bevorzugen. Hierfür kommen Gasturbinen in Frage (DE 299 15 154 U), das bevorzugte Mittel ist jedoch ein Gas-Kolbenmotor. Im Fall der Verwendung einer Brennkraftmaschine ist es möglich, die Brennkraftmaschinen der Fettverwertung und der Biogasverwertung zu koppeln, oder auch, die beiden Stromerzeuger auf eine gemeinsame Strom-Sammelschiene arbeiten zu lassen. Diese Zusammenführungen sind aber nicht notwendig. Eine getrennte Ableitung der auf der Grundlage des Fettes erzeugten elektrischen Leistung kann in manchen Ländern aufgrund öffentlicher Förderprogramme für "Bio-Energie" angezeigt sein.

Vorzugsweise wird ein Teil der im erfindungsgemäßen Prozeß anfallenden Nutzwärme auch mit Hilfe von Absorptions-Kältemaschinen in Kühlung umgesetzt.

Einzelne Komponenten des erfindungsgemäßen Verfahrens sind bereits an sich bekannt, und die Durchführung der einzelnen Verfahrenskomponenten ist somit fiir den Fachmann kein Problem. So ist es beispielsweise aus der DE 198 09 299 A bekannt, Tierkadaver einer Biogasanlage einzuspeisen und mit dem Biogas ein Blockheizkraftwerk zu betreiben. Die anaerobe Zersetzung organischer Abfälle einschließlich Fett zur Methanherstellung ist beispielsweise in DE 31 38 452 A, DE 33 07 796 A und DE 42 29 986 A beschrieben. Speziell auf Rinder-Schlachtabfälle zur Biogasgewinnung nimmt die DE 199 47 624 A Bezug. Die rotierende Energieumsetzung aus Biogas und pflanzlichem Öl zur Stromerzeugung über einen Dieselmotor und einen Generator ist in der DE 44 07 077 A beschrieben. Über die Verwendung tierischer Fette als Kraftstoff für Dieselmotoren gibt es eine Studie von Prof. Rudolf Sagerer, Universität der Bundeswehr, München, und einen Aufsatz Sagerer "Fett als Ersatzstoff für Dieselkraftstoff', Zeitschrift "Der Nahverkehr", Heft 1-2/97. Hierdurch ergibt sich aber nicht das erfinderische Konzept in seiner Gesamtheit.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:
- Fig.n 1 bis 3: schematische Blockdarstellungen von Anlagen zur Durchführung des neuerungsgemäßen Verfahrens gemäß drei Durchführungsbeispielen.

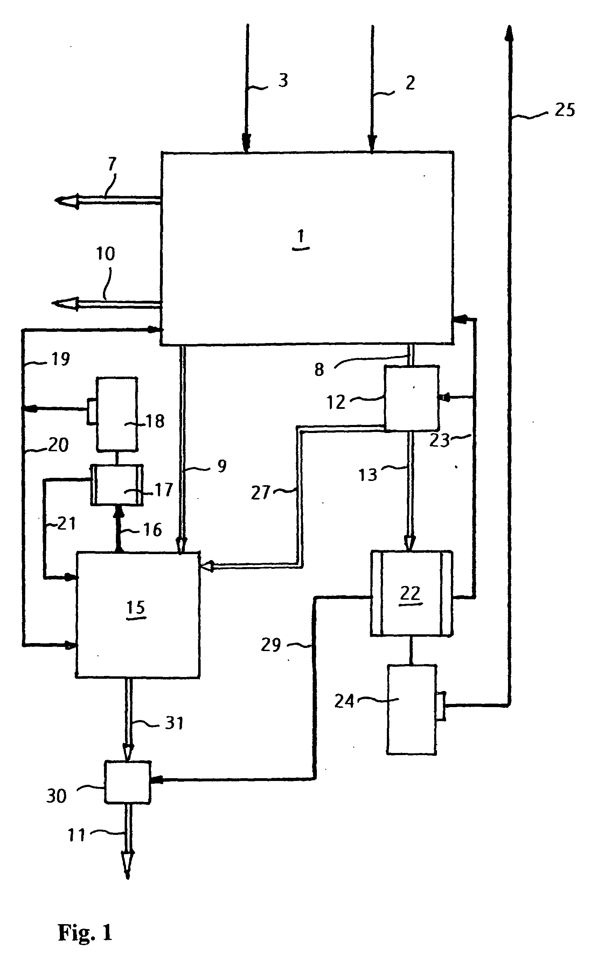

Es wird auf Fig. 1 Bezug genommen. Ein Schlachthof 1, der als Teileinheit eines industriellen Schlachtbetriebs dargestellt ist, ist zunächst über einen Anschluß 2 an das Elektrizitätsnetz und über einen Anschluß 3 an das Gasnetz angeschlossen.

Im Schlachthof 1 entstehen verschiedene Materialströme, die hier als Kanäle bezeichnet werden, nämlich ein Kanal 7 für Nutzprodukte, ein Kanal 8 für tierisches Fett, ein Kanal 9 für vergärbare Restprodukte und ein Kanal 10 für unverwertbare Restprodukte, die entsorgt werden müssen, wozu beispielsweise Material, das aus gesundheitlichen Gründen als Risikomaterial gewertet wird, gehört. Eventuell gehören auch Knochen dazu. Zu den Ausgangskanälen der Gesamtanlage gehört schließlich auch noch ein Kanal 11 für später beschriebene Restprodukte.

Der Kanal 8 für das tierische Fett führt zunächst zu einer Anlage 12 für die Fettschmelze und setzt sich dann als Kanal 13 fiir aufbereitetes, geschmolzenes heißes Fett fort.

Zu den im Kanal 9 transportierten vergärbaren Restprodukten gehören beispielsweise die Pansen- und Darminhalte der Tiere, sowie für den Verzehr und für eine sonstige Weiterverwertung ungeeignete Gewebe wie Binde-, Hautund Horngewebe, eventuell auch Knochenmaterial. Sie werden einem Fermenter 15 zugeführt, wo sie nach üblicher Aufbereitung mit Hilfe von entsprechenden Bakterienstämmen durch Vergärung unter Erzeugung von Biogas, das hauptsächlich aus CH₄ und CO₂ besteht, fermentiert werden.

In den Fig.n sind Materialströme durch Doppellinien und Energieströme, wozu auch Gasströme zählen, durch Einfachlinien dargestellt.

Das als Produkt der Vergärung im Fermenter 15 entstehende Biogas wird über eine Gasleitung 16 einem Gasmotor 17 eingespeist, der die darin steckende Energie in rotierende mechanische Energie und in Abwärme umwandelt. Die mechanische Energie wird zum Antrieb eines Stromgenerators 18 verwendet, dessen Stromerzeugung über eine Leitung 19 im wesentlichen den Strombedarf des industriellen Schlachthofs 1 deckt. Ein Teil des Ausgangsstroms des Generators 18 wird über einen Leitungsabzweig 20, ebenso wie die Abwärme des Gasmotors 17 über eine Wärmeleitung 21, in den Fermenter 15 zurückgeleitet, wo die Temperatur der gärenden Masse aufrechterhalten und verschiedene Hilfsaggregate wie Pumpen, Rührwerke usw. angetrieben werden müssen.

Das im Schlachthof separat kanalisierte tierische Abfallfett wird über den Kanal 8, die Fettschmelzanlage 12 und den Kanal 13 einem Fettmotor 22 in geschmolzener Form als Treibstoff zugeführt. Der Fettmotor 22 arbeitet nach dem Dieselprinzip, wobei wiederum eine nennenswerte Abwärme anfällt. Es sind zwei Wärmetauscher je Motoreinheit vorhanden, einer zur Wärmeübernahme aus dem Kühlwasser mit einer Temperatur in der Nähe des Wassersiedepunkts - der bei erhöhtem Druck auch über 100° C liegen kann -, und einer zur Wärmeübernahme aus dem Motorenabgas, der mit wesentlich höheren Temperaturen arbeitet. Die Wärme wird über eine Wärmeleitung 23 dem Schlachthof 1 und der Fettschmelzanlage 12 als Wärmeenergie zugeführt, und die rotierende mechanische Energie des Motors 22 treibt einen Stromgenerator 24. In bekannter Weise kann in gewissem Umfang das Energieaufkommen des Aggregats aus dem Motor 22 und dem Generator 24 zwischen der elektrischen Energie und der Wärmeenergie verschoben werden, wie es bei einem Blockheizkraftwerk üblich ist. Bei der dargestellten Anordnung wird der Wärmeenergiebedarf des Schlachthofs 1 durch die erzeugte Wärme gedeckt, während die restliche Energie des Fettmotors 22 als elektrischer Strom über eine Leitung 25 in das öffentliche Netz eingespeist und insofern verkauft wird. Die Maschinenregelung des Fettmotors 22 richtet sich nach dem über die Wärmeleitung 23 abgezogenen Wärmestrom und nicht nach dem elektrischen Strom in der Leitung 25.

Mit Hilfe der in die Fettschmelzanlage 12 eingespeisten Wärme wird dort das Fett aufbereitet. Vom Schlachthof 1 kommt es in sehr unterschiedlicher Konsistenz. Zunächst wird es dann gewolft und so auf eine einigermaßen einheitliche Korngröße gebracht. Aus dieser vergleichmäßigten Masse wird das Fett durch Einleiten von Heißdampf erschmolzen, wobei als Treibstoff verwendbares flüssiges Fett, Wasser und feste Restprodukte, die als Grieben bezeichnet werden, entstehen. Das flüssige Fett fließt über den Kanal 13 zum Fettmotor 22, und die Grieben, die ein Konglomerat aus Resteiweiß, Fett und Wasser darstellen, werden über einen Kanal 27 zur Mit-Vergärung in den Fermenter 15 eingespeist. Das entstehende Wasser, das als Leimwasser bezeichnet wird, kann entweder auch in den Fermenter zur Biogaserzeugung, oder in eine Kläranlage geleitet werden (nicht dargestellt).

Für die Fettschmelze können natürlich auch andere Wärmequellen als die Abwärme des Fettmotors herangezogen werden, auch Gas aus dem Anschluß 3 steht zur Verfügung.

Ein Teil der Abwärme des Fettmotors 22 wird auch noch dazu verwendet, Restprodukte des Fermenters 15 zu behandeln. Hierzu wird über eine Wärmeleitung 29 dieser Anteil der Abwärme einer Station 30 eingespeist, die die Restprodukte der Vergärung im Fermenter 15 von diesem über einen Material-Zwischenkanal 31 empfängt und zu deren Hygienisierung und Trocknung dient, In der Station 30 werden diese Restprodukte auf Teile einer Größe von höchstens 50 mm zerkleinert, dann bis zum Zerfall der Weichteile erhitzt und anschließend mindestens 20 Minuten lang ununterbrochen bei einer Temperatur von mindestens 133° C und einem mit gesättigtem Dampf erzeugten Druck von mindestens 3 bar heiß gehalten und dabei ständig durchmischt. Nach dieser Behandlung kann die Trocknung erfolgen. Die schließlichen Produkte der Station 30 verlassen die Anlage über den Kanal 11 als trockenes Granulat und sind beispielsweise für Düngezwecke, aber auch als Heizmaterial verwertbar oder müssen aus rechtlichen Gründen einer Verbrennung zugeführt werden.

In der Gesamtanlage der Fig. 1 sind der Fermenter 15 und der Fettmotor 22 jeweils mit ihren zugehörigen weiteren Stationen und Aggregate außerhalb des Schlachthofs 1 dargestellt. Tatsächlich kann jedoch die gesamte dargestellte Anlage innerhalb eines einzigen Komplexes untergebracht sein, der dann als Schlachtbetrieb bezeichnet wird, und der dargestellte Schlachthof 1 stellt nur eine funktionelle Unterteilung innerhalb des Komplexes dar.

Die erzeugten Energien - Strom und Wärme - können auch, statt getrennt zu den Verbrauchern geleitet zu werden, auf einen gemeinsamen Sammel- und Versorgungspunkt zusammengeworfen und von diesem abgezogen werden.

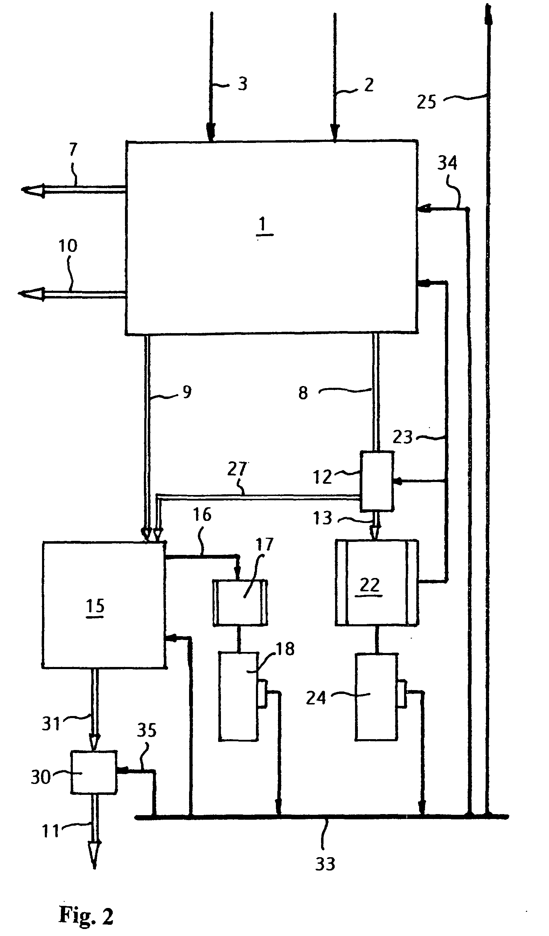

Die Anlagen nach den Fig.n 2 und 3 unterscheiden sich nicht wesentlich von der von Fig. 1. In Fig. 2 ist als Besonderheit dargestellt, daß die Generatoren 18 und 24 auf eine gemeinsame Stromschiene 33 arbeiten, an die einerseits eine Leitung 34 zum Schlachthof 1, andererseits ein Leitungsabzweig 35 zur im vorliegenden Fall elektrischen Hygienisierung und Trocknung der Restprodukte des Fermenters 15 in der Station 30, und schließlich als weiterer Abzweig die Leitung 25 zur Einspeisung übriger elektrischer Energie in das Elektrizitätsnetz angeschlossen sind.

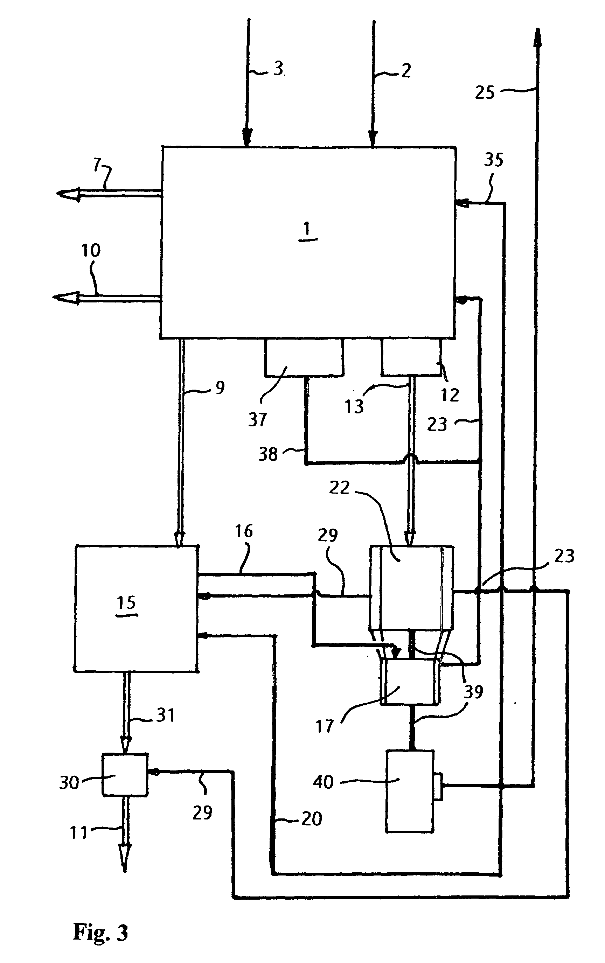

In Fig. 3 ist die Stromerzeugung noch weiter zusammengefaßt, indem der Fettmotor 22 und der Gasmotor 17 mechanisch gekoppelt sind, wie durch eine gemeinsame Welle 39 angedeutet ist, und ist die Wärme aller Abwärmequellen als Sammelleitung zur Wärmeleitung 23 gespeist, von der die Verbraucher ihren Wärmebedarf dann ganz oder teilweise decken. Einer der Wärmeverbraucher nach Fig. 3 ist auch eine auf dem Absorptionsprinzip arbeitende Kältemaschine 37, die über eine Wärmeleitung 38 die Wärmeleitung 23 abgreift und so die Wärme für den Kühlungsbedarf im Schlachthof 1 ausnützt. Die Welle 39 arbeitet auf einen für beide Kraftmaschinen gemeinsamen Generator 40, der Strom fiir den Schlachthof 1, fiir den Fermenter 15 und die Einspeisung in das öffentliche Netz liefert.

Die durch die Abfallverwertung erzeugten Energiemengen können beim erfindungsgemäßen Konzept ausreichend hoch sein, um die Abhängigkeit des Schlachthofs von Fremdenergie sehr zu verringern oder sogar ganz zu beseitigen.

## Patentansprüche

1. Verfahren der Energieversorgung eines Schlachtbetriebs (1), der Bedarf elektrischer Energie und Wärme sowohl für den fleischproduzierenden Betriebsteil als auch für den Teil der Entsorgung von Restprodukten hat, **dadurch gekennzeichnet, daß** man von den tierischen Restprodukten einerseits fette tierische Restprodukte und andererseits vergärbare tierische Restprodukte getrennt kanalisiert (8, 9), daß man die vergärbaren tierischen Restprodukte unter Erzeugung von brennbarem Biogas zur Vergärung bringt (15) und zumindest einen Teil des brennbaren Gases zur Erzeugung von elektrischem Strom nutzt (17, 18), daß man die fetten tierischen Restprodukte nach einer Aufbereitung als Treibstoff verwendet, mit dem man wenigstens eine nach dem Dieselprinzip arbeitende Brennkraftmaschine (22) betreibt, deren Ausgangsleistung man ebenfalls in elektrische Leistung umsetzt (24), und daß man die Verlustwärme von wenigstens einer (22) der Brennkraftmaschinen als Abwärme abnimmt (23) und an Energieverbraucher des Schlachtbetriebs (1) zurückführt.

2. Verfahren nach Anspruch 1, **dadurch gekennzeichnet, daß** man mit dem brennbaren Biogas eine Brennkraftmaschine (17) betreibt, deren Ausgangsleistung man in elektrische Leistung umsetzt.

3. Verfahren nach Anspruch 1, **dadurch gekennzeichnet, daß** man mit dem brennbaren Biogas Brennstoffzellen speist, die elektrischen Strom erzeugen.

4. Verfahren nach einem der Ansprüche 1 bis 3, **dadurch gekennzeichnet, daß** man einen Teil der Brennkraftmaschinen-Abwärme abzweigt und zur Energiespeisung in eine Station (30) verwendet, in der man nicht-gasförmige Restprodukte der Vergärung zur Entsorgung vorbereitet, nämlich hygienisiert und gegebenenfalls trocknet.

5. Verfahren nach einem der Ansprüche 1 bis 4, **dadurch gekennzeichnet, daß** man getrocknete Restprodukte der Vergärung zur weiteren Wärmegewinnung verbrennt.

6. Verfahren nach einem der Ansprüche 1 bis 5, **dadurch gekennzeichnet, daß** man mehrere Brennkraftmaschinen (17, 22) zur Stromerzeugung koppelt.

7. Verfahren nach einem der Ansprüche 1 bis 5, **dadurch gekennzeichnet, daß** man die Stromerzeugung auf der Basis des Biogases getrennt von der Stromerzeugung auf der Basis anderer Energieträger durchführt.

8. Verfahren nach einem der Ansprüche 1 bis 7, **dadurch gekennzeichnet, daß** man einen Stromüberschuß in das öffentliche Elektrizitätsnetz einspeist (25).

9. Verfahren nach einem der Ansprüche 1 bis 8, **dadurch gekennzeichnet, daß** man die fetten Restprodukte mit Wärme so aufbereitet, daß daraus der Treibstoff, Griebenmaterial und Wasser entstehen, und man die Grieben zusammen mit den vergärbaren tierischen Restprodukten zur Vergärung bringt.

10. Verfahren nach einem der Ansprüche 1 bis 9, **dadurch gekennzeichnet, daß** man mit der Abwärme auch eine Absorptions-Kältemaschine speist.

## Claims

1. Process for the energy supply of a slaughter house (1) which requires electric energy and heat for the meat-producing part of the operation as well as for the part of the operation disposing of the waste products, **characterized in that** of the animal waste products fatty animal waste products on the one hand and fermentable animal waste products on the other hand are channeled separately (8, 9), that the fermentable animal waste products are fermented producing combustible biogas (15) and at least part of the combustible gas is used for generating electric current (17, 18), that the fatty animal waste products after processing are used as fuel with which at least one combustion engine (22) working according to the Diesel principle is powered whose output power is also converted into electric power (24), and that the dissipated heat of at least one (22) of the engines is used as waste heat (23) and re-conducted to energy consumers of the slaughter house (1).

2. Process according to claim 1, **characterized in that** the combustible biogas is used to power a combustion engine (17) whose output is converted into electric power.

3. Process according to claim 1, **characterized in that** the combustible biogas is fed to fuel cells which generate electricity.

4. Process according to any one of claims 1 to 3, **characterized in that** part of the engine waste heat is branched off and used for providing energy for a station (30) in which the non-gaseous waste products of the fermentation process are prepared for disposal, i.e. hygienated and, if necessary, dried.

5. Process according to any one of claims 1 to 4, **characterized in that** the dried waste products of the fermentation process are burned in order to generate more heat.

6. Process according to any one of claims 1 to 5, **characterized in that** several engines (17, 22) are coupled for the purpose of generating electricity.

7. Process according to any one of claims 1 to 5, **characterized in that** the generation of electricity on the basis of the biogas is carried out separately from the generation of electricity on the basis of other energy sources.

8. Process according to any one of claims 1 to 7, **characterized in that** a surplus of electricity is input into the public electricity grid (25).

9. Process according to any one of claims 1 to 8, **characterized in that** by means of heat the fatty waste products are processed such that fuel, greaves material and water are produced, and that the greaves are fermented together with the fermentable animal waste products.

10. Process according to any one of claims 1 to 9, **characterized in that** the waste heat is also used to feed an absorption refrigerating machine.

## Revendications

1. Procédé pour l'alimentation en énergie d'un abattoir (1), qui a besoin d'énergie électrique et de chaleur aussi bien pour la partie de l'entreprise qui produit la viande que pour la partie qui élimine les produits résiduels,
**caractérisé en ce que**
parmi les produits résiduels animaux, on canalise séparément (8, 9), d'une part, les produits résiduels animaux gras et, d'autre part, les produits résiduels animaux fermentescibles, on fait fermenter (15) les produits résiduels animaux fermentescibles, avec production d'un bio-gaz combustible et, avec au moins une partie du gaz combustible, on produit du courant électrique (17, 18), les produits résiduels animaux gras après une préparation, sont utilisés comme un carburant avec lequel on alimente au moins un moteur à combustion interne (22) travaillant sur le principe diesel, dont on convertit (24) aussi la puissance de sortie en puissance électrique, et on prélève la chaleur de pertes d'au moins un (22) des moteurs à combustion interne, en qualité de chaleur perdue (23) et on la renvoie à des consommateurs d'énergie de l'abattoir (1).

2. Procédé selon la revendication 1,
**caractérisé en ce que**
on alimente avec le bio-gaz combustible un moteur à combustion interne (17) dont on convertit la puissance de sortie en puissance électrique.

3. Procédé selon la revendication 1,
**caractérisé en ce que**
on alimente avec le bio-gaz combustible des piles à combustible qui produisent du courant électrique.

4. Procédé selon une des revendications 1 à 3,
**caractérisé en ce que**
on dérive une partie de la chaleur perdue des moteurs à combustion interne et on l'utilise pour l'alimentation en énergie d'une station (30) dans laquelle on prépare les produits résiduels non gazeux de la fermentation pour la mise en décharge, plus précisément, on les rend hygiéniques et on les sèche éventuellement.

5. Procédé selon une des revendications 1 à 4,
**caractérisé en ce que**
on brûle les produits résiduels séchés de la fermentation pour en tirer une nouvelle quantité de chaleur.

6. Procédé selon une des revendications 1 à 5,
**caractérisé en ce que**
on accouple des plusieurs moteurs à combustion internes (17, 22) pour la production de courant.

7. Procédé selon une des revendications 1 à 5,
**caractérisé en ce que**
on conduit la production de courant basée sur le bio-gaz séparément de la production de courant basée sur d'autres supports d'énergie.

8. Procédé selon une des revendications 1 à 7,
**caractérisé en ce que**
on injecte un surplus de courant dans le réseau électrique public (25).

9. Procédé selon une des revendications 1 à 8,
**caractérisé en ce que**
on traite les produits résiduels gras par la chaleur de telle manière qu'il se forme à partir de ces produits du carburant, de la matière de cretons et de l'eau et qu'on réunit les cretons aux produits résiduels animaux fermentescibles pour les faire fermenter.

10. Procédé selon une des revendications 1 à 9,
**caractérisé en ce que**
on alimente aussi une machine frigorifique à absorption avec la chaleur perdue.
